# EUROPÄISCHE PATENTANMELDUNG

(11) **EP 3 721 712 A1**
(43) Veröffentlichungstag der Anmeldung: **14.10.2020**
(21) Anmeldenummer: 19168908.2
(22) Anmeldetag: 12.04.2019
(51) Int. Cl.: A21B 1/48

(54) **BACKVORRICHTUNG UND PRODUKTIONSANLAGE**

(71) Anmelder: Haas Food Equipment GmbH, 2100 Leobendorf (AT)
(72) Erfinder: Riefenthaler, Philipp, 2000 Stockerau (AT)
(74) Vertreter: Puchberger & Partner Patentanwälte

(57) **Zusammenfassung**

Produktionsanlage und Backvorrichtung zum Herstellen mindestens eines, insbesondere endlosen, gebackenen Bandes (1), umfassend einen in oder an einem Maschinengestell (2) umlaufenden Ring (3), der an mindestens einer Oberfläche eine endlose Backfläche (4) umfasst, eine Heizanordnung (5), die mindestens einen Induktor (6) zur induktiven Beheizung des Rings (3) und ein Traggestell (7) aufweist, eine Backmassenauftragsvorrichtung (8) zum kontinuierlichen Auftragen einer vorzugsweise flüssigen Backmasse auf die Backfläche (4), eine Bandabnahmevorrichtung (9) zum kontinuierlichen Abnehmen des auf der beheizten Backfläche (4) gebackenen Bandes (1), und eine Haltevorrichtung (11) zur Halterung der Heizanordnung (5) in einem Heizbereich, wobei die Heizanordnung (5) über mindestens eine drehbar gelagerte Rolle (10) am Ring (3) abgestützt ist.

## Beschreibung

Die Erfindung betrifft eine Backvorrichtung und eine Produktionsanlage gemäß den Oberbegriffen der unabhängigen Patentansprüche.

Insbesondere betrifft die Erfindung eine Vorrichtung zum Herstellen mindestens eines endlosen gebackenen Bandes, das gegebenenfalls in heißem, plastisch verformbarem Zustand zu einer Waffelrolle aufgewickelt wird. Derartige Produkte sind beispielsweise als Waffelröllchen oder Hippen bekannt.

Vorrichtungen zur kontinuierlichen Herstellung derartiger Produkte sind in unterschiedlichen Ausführungsformen bekannt und publiziert.

Insbesondere sind Backvorrichtungen bekannt, bei denen ein beheizter, kontinuierlich umlaufender Ring vorgesehen ist, auf dessen äußerer Mantelfläche in einem ersten Bereich ein flüssiger Teig aufgetragen wird. Der Backring wird beispielsweise durch Gasbrenner beheizt, womit die aufgetragene Backmasse während einer gewissen Backzeit gebacken wird. Durch kontinuierliches Auftragen der Backmasse auf einen umlaufenden Backring werden endlose Backbänder gebildet, die in einem zweiten Bereich durch eine Abnahmevorrichtung kontinuierlich abgenommen und in weiterer Folge bevorzugt aufgewickelt und abgelängt werden.

Zur Verbesserung der Effizienz derartiger Vorrichtungen ist es bekannt, die Beheizung als Induktionsheizung auszubilden. Dennoch hat sich in der Praxis gezeigt, dass die Qualität der gebildeten Backprodukte bei der Verwendung von Induktionsheizungen gewissen Schwankungen unterworfen ist.

Aufgabe der Erfindung ist es nun, herkömmliche gattungsgemäße Backvorrichtungen dahingehend zu verbessern, dass eine gleichbleibend hohe Produktqualität bei Verwendung einer Induktionsheizung erzielt wird.

Die erfindungsgemäße Aufgabe wird insbesondere durch die Merkmale des unabhängigen Patentanspruchs gelöst.

Überraschenderweise wurde festgestellt, dass es trotz angemessener Fertigungstoleranzen zu keiner gleichmäßigen Erwärmung des Rings durch die Induktionsheizung kommt.

Ein beispielhafter Ring der erfindungsgemäßen Backvorrichtung weist einen Durchmesser von 1,5 bis 3 m, vorzugsweise von etwa 2 bis 2,5 m, auf. Die Stärke des Rings beträgt beispielsweise 2 bis 10 cm, vorzugsweise 5 bis 6cm. Die Breite des Rings beträgt beispielsweise 30 bis 50 cm.

In der Praxis hat sich herausgestellt, dass derartige Ringe fertigungsbedingt und insbesondere auch bedingt durch die nachträgliche Erwärmung in der Backvorrichtung, nicht exakt rund sind. Überdies ist die Erwärmung des Rings durch einen Induktor bei konstanter Leistung stark von dem Abstand des Induktors zum Ring abhängig.

Um diesen Anforderungen Rechnung zu tragen, ist erfindungsgemäß vorgesehen, dass die Heizanordnung über mindestens eine drehbar gelagerte Rolle am Ring abgestützt ist. Zusätzlich ist die Heizanordnung gegenüber dem Maschinengestell beweglich angeordnet, wodurch die Lage der Heizanordnung dem Verlauf des Rings bei dessen umlaufender Bewegung nachgeführt werden kann. Dadurch kann die Produktqualität erheblich verbessert werden.

Die Erfindung betrifft insbesondere eine Backvorrichtung zum Herstellen mindestens eines, insbesondere endlosen, gebackenen Bandes, umfassend:
- einen in oder an einem Maschinengestell umlaufenden Ring, der an mindestens einer Oberfläche eine endlose Backfläche umfasst,
- eine Heizanordnung, die mindestens einen Induktor zur induktiven Beheizung des Rings und ein Traggestell aufweist,
- eine Backmassenauftragsvorrichtung zum kontinuierlichen Auftragen einer vorzugsweise flüssigen Backmasse auf die Backfläche,
- eine Bandabnahmevorrichtung zum kontinuierlichen Abnehmen des auf der beheizten Backfläche gebackenen Bandes,
- und eine Haltevorrichtung zur Halterung der Heizanordnung in einem Heizbereich,

Erfindungsgemäß ist vorgesehen, dass die Heizanordnung über mindestens eine drehbar gelagerte Rolle am Ring abgestützt ist.

Gegebenenfalls ist vorgesehen, dass die mindestens eine Rolle zur konstanten Beabstandung des Induktors von dem Ring an einer Fläche des Rings, insbesondere an der inneren Mantelfläche oder an der äußeren Mantelfläche des Rings, abrollt.

Gegebenenfalls ist vorgesehen, dass am Traggestell der Heizanordnung mehrere Rollen, insbesondere vier Rollen, angebracht sind und dass die Rollen zusammen mit der Heizanordnung einen Wagen bilden, der auf einer Fläche des umlaufenden Rings abrollt, oder der eine Fläche des umlaufenden Rings abfährt.

Gegebenenfalls ist vorgesehen, dass die Heizanordnung über eine Haltevorrichtung in einem ortsfesten bzw. maschinenfesten Heizbereich gehalten ist, wobei die Haltevorrichtung eine Bewegung der Heizvorrichtung gegenüber dem Maschinengestell in radialer Richtung des Rings zulässt.

Gegebenenfalls ist vorgesehen, dass am Traggestell der Heizanordnung mehrere Induktoren angebracht sind.

Gegebenenfalls ist vorgesehen, dass zwischen dem mindestens einen Induktor und dem Ring ein Spalt freigehalten ist, und dass eine Justieranordnung zur Wahl und Einstellung des Spaltabstandes und insbesondere der Form des Spalts vorgesehen ist.

Gegebenenfalls ist vorgesehen, dass die Justieranordnung einen Rollenverstellmechanismus zur festlegbaren Einstellung der Lage der Rollen und insbesondere deren Achsen gegenüber der Heizanordnung und insbesondere gegenüber dem Traggestell umfasst.

Gegebenenfalls ist vorgesehen, dass die Justieranordnung einen Induktorverstellmechanismus zur festlegbaren Einstellung der Lage des Induktors gegenüber dem Traggestell umfasst.

Gegebenenfalls ist vorgesehen, dass die Justieranordnung einen Induktorverstellmechanismus zur festlegbaren individuellen Einstellung der Lage der Induktoren gegenüber dem Traggestell umfasst.

Gegebenenfalls ist vorgesehen, dass der Ring oder zumindest ein Teil des Rings als induktiv erwärmter Suszeptor ausgebildet ist oder wirkt.

Gegebenenfalls ist vorgesehen, dass am Maschinengestell eine Halterolle drehbar gelagert angebracht ist, an der der Ring abgestützt ist, und dass ein Antrieb zum Drehen des Rings um seine Drehachse vorgesehen ist.

Gegebenenfalls ist vorgesehen, dass der Ring im Maschinengestell schwimmend gelagert ist.

Gegebenenfalls ist vorgesehen, dass die Heizvorrichtung und insbesondere die mindestens eine Rolle auf einer Fläche der Rings abgestützt ist, und dass die Backfläche auf der gegenüberliegenden Fläche des Rings angeordnet ist, und insbesondere dass die Heizvorrichtung an der inneren Mantelfläche des Rings und die Backfläche auf der äußeren Mantelfläche des Rings angeordnet sind. Gegebenenfalls ist vorgesehen, dass die mindestens eine Rolle einen Spurkranz zur seitlichen Führung der Heizanordnung gegenüber dem Ring umfasst.

Gegebenenfalls ist vorgesehen, dass beidseitig der Heizvorrichtung jeweils eine Rolle angeordnet ist, dass beide Rollen jeweils einen Spurkranz umfassen, und dass die beiden Spurkränze zur seitlichen Zentrierung der Heizanordnung den Ring beidseitig überragen oder umgreifen.

Gegebenenfalls betrifft die Erfindung eine Produktionsanlage zur Herstellung gerollter Waffeln, insbesondere Ringbackmaschine, umfassend eine erfindungsgemäße Backvorrichtung, eine Wickelvorrichtung zum kontinuierlichen Bilden einer schräg gewickelten Waffelrolle, und gegebenenfalls eine Schneidvorrichtung zum Bilden einzelner Waffelröllchen durch Ablängen der Waffelrolle.

Die Heizanordnung ist über mindestens eine drehbar gelagerte Rolle am Ring abgestützt, wobei insbesondere die mindestens eine Rolle an einer Fläche des Rings abrollt.

Bevorzugt ist vorgesehen, dass mehrere Rollen am Traggestell der Heizanordnung drehbar gelagert sind, sodass die Rollen zusammen mit der Heizanordnung einen Wagen bilden, der eine Fläche des bewegten Rings abfährt.

Bevorzugt werten jedoch die Heizanordnung und/oder der Wagen relativ zum Maschinengestell in einem Heizbereich gehalten, wobei diese Halterung über eine Haltevorrichtung geschieht. Diese Haltevorrichtung ist bevorzugt derart ausgebildet, dass eine gewisse Bewegbarkeit der Heizvorrichtung gegenüber dem Maschinengestell freigehalten bleibt.

Insbesondere kann die Heizvorrichtung in radialer Richtung des Rings bewegt werden, was jedoch auch einschließt, dass diese Bewegung weitere Bewegungskomponenten umfassen kann, sodass gegebenenfalls auch eine im Wesentlichen schräg zur radialen Richtung verlaufende Bewegung umfasst ist. Wichtig ist, dass die Heizanordnung dem Verlauf des Rings nachgeführt werden kann.

Die Haltevorrichtung sperrt bevorzugt eine Bewegung gegenüber dem Maschinengestell, die entlang des Rings verläuft; lässt aber eine Bewegung gegenüber dem Maschinengestell zu, die im Wesentlichen radial zum Ring verläuft. Dadurch kann sich der Ring entlang der Heizanordnung bewegen, wobei die Heizanordnung im Heizbereich gehalten wird. Jedoch kann die Heizanordnung dem Verlauf des sich drehenden Rings nachgeführt werden und zwar insbesondere in radialer Richtung.

Zwischen der Heizvorrichtung bzw. dem Induktor der Heizvorrichtung und dem Ring ist ein Spalt mit einem gewissen Spaltabstand freigehalten, der insbesondere als Luftspalt ausgebildet ist. Um diesen Spalt exakt einstellen zu können, ist eine Justieranordnung vorgesehen. Bevorzugt ist diese Justieranordnung derart ausgebildet, dass der Spalt exakt eingestellt und festgelegt werden kann.

Die Konstanthaltung des eingestellten Spaltabstandes geschieht dann über die Abstützung der Rolle an dem Ring. Eine kontinuierliche Veränderung der Justieranordnung kann dadurch entfallen. Die Justieranordnung wird daher bevorzugt bei der erstmaligen Inbetriebnahme oder bei Revisionsarbeiten betätigt bzw. überprüft. Während des Backbetriebs bleibt die Justieranordnung jedoch vorzugsweise unverändert.

Die Justieranordnung kann einen Rollenverstellmechanismus umfassen, über den die Lage der Rollen bzw. deren Achsen gegenüber der Heizanordnung verändert werden kann oder können. Durch den Rollenverstellmechanismus kann somit die grundsätzliche Lage der Heizanordnung bzw. deren Traggestell gegenüber dem Ring verändert werden.

Bevorzugt umfasst die Justieranordnung einen Induktorverstellmechanismus, über den die Lage des Induktors gegenüber der Heizanordnung bzw. deren Traggestell erfolgen kann. Besonders vorteilhaft ist diese Konstruktion dann, wenn die Heizanordnung mehrere Induktoren umfasst. In diesem Fall können die Induktoren individuell in ihrer Lage gegenüber dem Traggestell eingestellt und festgelegt werden.

Der Spalt ist bevorzugt der Form oder dem Verlauf des Rings angepasst und verläuft folglich gekrümmt. Auch das Traggestell ist bevorzugt der Form oder dem Verlauf des Rings angepasst. Bei der Verwendung mehrerer Induktoren, kann dadurch jeder Induktor denselben Abstand zum Ring aufweisen. Die ganze Heizanordnung ist bevorzugt der Form oder dem Verlauf des Rings angepasst.

Der Ring selbst wirkt bevorzugt als induktiv erwärmbarer Suszeptor und ist insbesondere aus einem geeigneten Metall gefertigt, das induktiv erwärmbar ist. Beispielsweise ist der Ring zumindest teilweise oder vollständig aus Stahl, beispielsweise aus C50 gefertigt.

Die Induktoren weisen beispielsweise eine Gesamtleistung von 20 bis 100 KW, vorzugsweise von etwa 60 KW auf.

In allen Ausführungsformen ist bevorzugt vorgesehen, dass der Ring induktiv auf eine Temperatur von 110 °C bis 200 °C, besonders bevorzugt 150 °C bis 170 °C, erwärmt ist.

Der Ring umfasst eine Backfläche, wobei diese Backfläche in allen Ausführungsformen bevorzugt mindestens eine Oberfläche des Rings selbst ist. Alternativ kann der Ring jedoch auch mit einer Schicht versehen sein, die an ihrer Außenseite die Backfläche bildet. Gegebenenfalls kann der Ring an mehreren Seiten jeweils eine Backfläche umfassen.

Der Ring ist umlaufend im oder am Maschinengestell angeordnet, was bedeutet, dass der Ring im bestimmungsgemäßen Betrieb um seine Drehachse, also um die Rotationsachse der Backfläche gedreht wird. Hierzu ist bevorzugt mindestens eine Halterolle drehbar gelagert am Maschinengestell angebracht, an der oder an denen der Ring abgestützt ist. Hierbei gibt es eine bevorzugte Konfiguration, bei der der Ring hängend an einer Halterolle angeordnet ist. Grundsätzlich kann der Ring jedoch auch stehend auf mindestens einer im unteren Bereich angeordneten Halterolle abgestützt sein. Zum Antrieb der Drehung des Rings ist ein Antrieb vorgesehen, der beispielsweise auf eine Halterolle wirkt.

Bevorzugt ist der Ring am Maschinengestell schwimmend gelagert, womit eine seitliche Zwangsführung des Rings am Maschinengestell entfallen kann.

Gegebenenfalls ist vorgesehen, dass die Backfläche an der Außenseite, insbesondere an der äußeren Mantelfläche, des Rings vorgesehen ist. Gegebenenfalls kann alternativ oder zusätzlich eine Backfläche an der inneren Mantelfläche des Rings angeordnet sein.

Gegebenenfalls werden an einer Backfläche, beispielsweise an der äußeren Mantelfläche oder an der inneren Mantelfläche, mehrere gebackene Bänder gleichzeitig hergestellt.

In weiterer Folge wird die Erfindung anhand der Figuren weiter beschrieben, wobei
Fig. 1 eine Aufsicht einer möglichen Ausgestaltung einer erfindungsgemäßen Produktionsanlage,
Fig. 2 eine Seitenansicht einer erfindungsgemäßen Produktionsanlage, und
Fig. 3 ein Detail einer erfindungsgemäßen Backvorrichtung zeigen.

Wenn nicht anders angegeben, so entsprechen die Bezugszeichen folgenden Komponenten:
Band 1, Maschinengestell 2, Ring 3, Backfläche 4, Heizanordnung 5, Induktor 6, Traggestell 7, Backmassenauftragsvorrichtung 8, Bandabnahmevorrichtung 9, Rolle 10, Haltevorrichtung 11, innere Mantelfläche 12, äußere Mantelfläche 13, Spalt 14, Justieranordnung 15, Spaltabstand 16, Rollenverstellmechanismus 17, Achse 18, Induktorverstellmechanismus 19, Halterolle 20, Antrieb 21, Wickelvorrichtung 22, Schneidvorrichtung 23, Spurkranz 24.

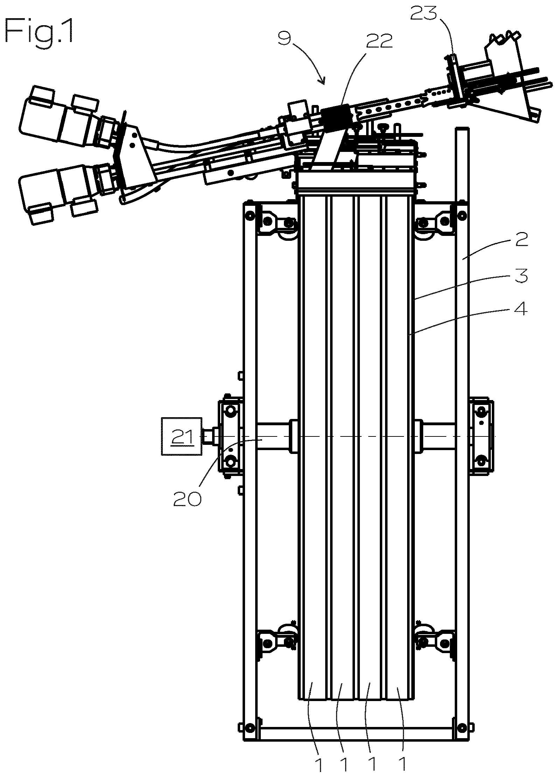

**Fig. 1** zeigt eine schematische Ansicht einer Produktionsanlage zur Herstellung gerollter Waffeln, die eine erfindungsgemäße Backvorrichtung umfasst.

Die Backvorrichtung umfasst einen in einem Maschinengestell 2 drehbar angeordneten Ring 3. Dieser Ring 3 umfasst eine Backfläche 4, auf der mindestens ein gebackenes Band 1 hergestellt wird. Insbesondere wird durch eine in Fig. 1 nicht dargestellte Backmassenauftragsvorrichtung 8 kontinuierlich Teig auf die beheizte Backfläche 4 aufgetragen.

Die sich kontinuierlich bewegende Backfläche 4 transportiert dann den aufgetragenen Teig zu einer Bandabnahmevorrichtung 9. Während des Transports auf der heißen Backfläche 4 wird der Teig zu einem gebackenen Band 1 gebacken. Werden, wie im vorliegenden Ausführungsbeispiel, mehrere Bänder 1 gebacken, so sind in der Regel auch mehrere Bandabnahmevorrichtungen 9 vorgesehen.

Die Darstellung der Fig. 1 ist schematisch, wobei einige Teile, wie beispielsweise das Gehäuse, ausgeblendet sind, um den Aufbau der Backvorrichtung beschreiben zu können.

In der vorliegenden Ausführungsform ist eine Halterolle 20 vorgesehen, an der der Ring 3 abgestützt ist. Diese Halterolle 20 ist im vorliegenden Fall durch einen Antrieb 21 drehbar angetrieben, womit auch der Ring 3 in Drehung versetzt wird.

Die in Fig. 1 dargestellte Produktionsanlage umfasst überdies eine Wickelvorrichtung 22 zur Bildung einer Waffelrolle. Überdies umfasst die Produktionsanlage eine Schneidvorrichtung 23, über die die Waffelrolle in wählbaren Abständen abgelenkt wird.

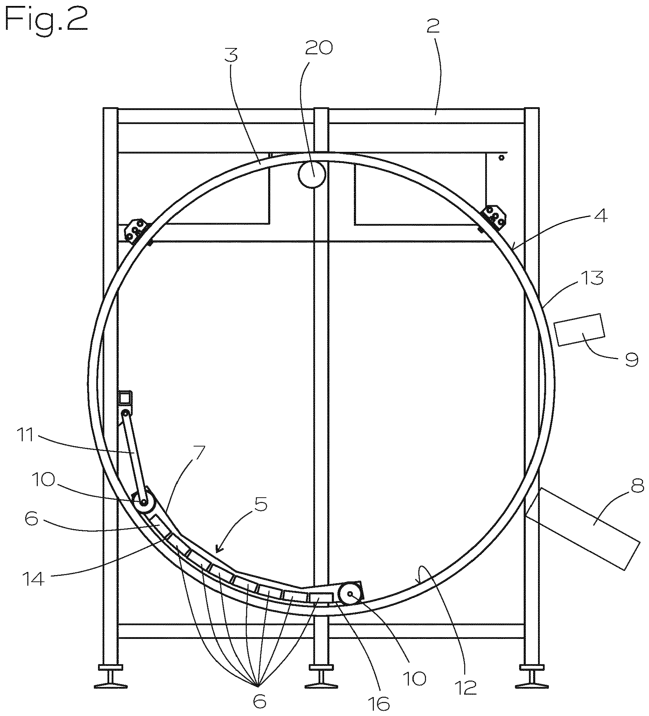

**Fig. 2** zeigt eine schematische Seitenansicht einer erfindungsgemäßen Backvorrichtung, wobei wiederum einige Teile zur besseren Ersichtlichkeit des Aufbaus der Backvorrichtung ausgeblendet sind.

Die Backvorrichtung umfasst ein Maschinengestell 2, in oder an dem der Ring 3 umlaufend angeordnet ist. Der Ring 3 umfasst eine Backfläche 4, auf der der Backvorgang durchgeführt wird. In der vorliegenden Ausführungsform ist die Backfläche 4 an der äußeren Mantelfläche 13 angeordnet. Der Teig wird durch eine Backmassenauftragsvorrichtung 8 aufgetragen. Die Abnahme des gebackenen Bandes 1 erfolgt bevorzugt kontinuierlich durch die Bandabnahmevorrichtung 9.

Die Drehrichtung des Rings 3 verläuft in der Darstellung der Fig. 2 im Uhrzeigersinn. Dies bedeutet, dass in der vorliegenden Konfiguration die Backzone einen Großteil des Umfangs des Rings einnimmt. Die Backzone reicht insbesondere entlang der Drehrichtung des Rings von der Backmassenauftragsvorrichtung 8 bis zur Bandabnahmevorrichtung 9.

Zur Beheizung des Rings 3 und insbesondere der Backfläche 4 ist eine Heizanordnung 5 vorgesehen. Diese Heizanordnung 5 umfasst mindestens einen Induktor 6, wobei bei der vorliegenden Ausführungsform mehrere Induktoren 6, insbesondere acht Induktoren 6, vorgesehen sind. Der mindestens eine Induktor 6 ist an einem Traggestell 7 angebracht. Die Heizanordnung 5 ist über eine Rolle 10, im vorliegenden Fall über mehrere Rollen 10, am Ring 3 abgestützt.

Insbesondere ist durch die Heizanordnung 5 und die Rollen 10 eine wagenförmige Anordnung gebildet, die den Ring 3 abfährt, sobald dieser in Bewegung gesetzt wird und sich um seine Drehachse dreht. Die Heizanordnung 5 ist über eine Haltevorrichtung 11 in einem Heizbereich gehalten. Insbesondere ist die Heizanordnung 5 über die Haltevorrichtung 11 mit dem Maschinengestell 2 gekoppelt. Dabei ist die Haltevorrichtung 11 derart ausgebildet, dass die Heizanordnung 5 in dem Heizbereich gehalten wird, selbst wenn sich der Ring 3 bewegt. Dennoch ist durch die Haltevorrichtung 11 die Heizanordnung 5 bewegbar gegenüber dem Maschinengestell 2 angeordnet.

Diese Bewegbarkeit ermöglicht das freie Abrollen der Rollen 10 an dem Ring 3. Insbesondere ist eine Bewegung in radialer Richtung möglich. Wird nun der Ring 3 in Bewegung gesetzt, so rotiert er um seine Rotationsachse. Hierbei wird über die Haltevorrichtung 11 die Heizanordnung 5 im Heizbereich gehalten. Ist der Ring 3 jedoch nicht perfekt rund, so können diese Toleranzabweichungen durch die bewegliche Anordnung der Heizanordnung 5 gegenüber dem Maschinengestell 2 ausgeglichen werden.

Insbesondere ist zwischen den Induktoren 6 und dem Ring 3 ein Spalt 14 freigehalten. Dieser Spalt 14 ist beispielsweise ein Luftspalt. Dieser Spalt 14 ergibt sich dadurch, dass die mindestens eine Rolle 10, insbesondere die Rollen 10, das Traggestell 7 und/oder die Induktoren 6 Richtung Ring 3 überragen.

Die bewegliche Anordnung der Heizanordnung 5 gegenüber dem Maschinengestell 2 ist in der vorliegenden Ausführungsform durch eine Haltevorrichtung 11 gebildet, die einen gelenkig mit dem Maschinengestell 2 gekoppelten Stab umfasst. Alternativ zu dieser Ausführungsform könnte auch eine Geradführung vorgesehen sein, bei der starr mit dem Traggestell 7 verbundene Bolzen jeweils in ein starr mit dem Maschinengestell verbundenes Langloch ragen, wobei die Langlöcher bevorzugt parallel zueinander und nahezu radial verlaufend angeordnet sind, sodass eine Geradführung gebildet werden kann.

Die Heizanordnung 5 ist in der vorliegenden Ausführungsform insbesondere im Bereich der inneren Mantelfläche 12 angeordnet. In der vorliegenden Ausführungsform rollen auch die Rollen 10 der Heizanordnung 5 an der inneren Mantelfläche 12 ab. Insbesondere ist die Heizanordnung 5 im unteren Bereich, bevorzugt im unteren Drittel des Rings 3 angeordnet.

Gemäß einer alternativen Ausführungsform kann jedoch die Heizanordnung 5 an der äußeren Mantelfläche 13 angeordnet sein und an dieser abrollen. Beispielsweise könnte gemäß dieser alternativen Ausführungsform die Heizanordnung 5 im oberen Bereich auf der äußeren Mantelfläche 13 des Rings 3 aufliegen. In diesem Fall ist es vorteilhaft, die Backmassenauftragsvorrichtung 8 derart auszugestalten, dass diese die Backmasse auf die innere Mantelfläche 12 aufträgt. Auch die Bandabnahmevorrichtung 9 kann in dieser Ausführungsform das Band 1 an der inneren Mantelfläche 12 des Rings 3 abnehmen.

Der Ring 3 ist an einer Halterolle 20 abgestützt. Die Halterolle 20 ist bevorzugt von einem nicht dargestellten Antrieb 21 angetrieben, um die umlaufende Bewegung des Rings 3 zu bewirken. Zusätzlich können in allen Ausführungsformen Führungsrollen vorgesehen, durch die der Ring 3 in seiner Lage zentriert und insbesondere abgestützt sein kann.

Bevorzugt ist auch bei der Ausführungsform der Fig. 2 die gesamte Backvorrichtung bzw. die Produktionsanlage mit einem Gehäuse versehen, das gegebenenfalls auch thermisch isoliert sein kann. Insbesondere betreffen die Fig. 1 und die Fig. 2 dieselbe Ausführungsform der Backvorrichtung bzw. der Produktionsanlage.

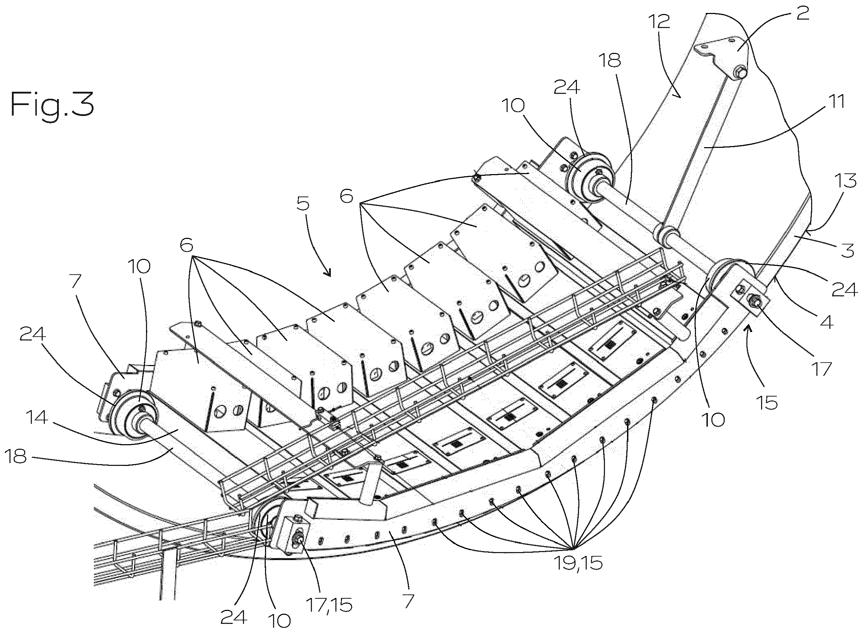

**Fig. 3** zeigt eine Schrägansicht einer möglichen Ausgestaltung der Backvorrichtung, insbesondere Details zur Beheizung des Rings 3.

Die Backvorrichtung umfasst eine Heizanordnung 5 mit mindestens einem Induktor 6. In der vorliegenden Ausführungsform sind mehrere Induktoren 6 vorgesehen. Diese sind in allen Ausführungsformen dazu eingerichtet, den Ring 3 und insbesondere die Backfläche 4 induktiv zu erwärmen. Die Heizanordnung 5 umfasst mindestens ein Traggestell 7. Das Traggestell 7 ist in der vorliegenden Ausführungsform mehrteilig ausgeführt und umfasst seitliche Träger.

An dem Traggestell 7 sind die Induktoren 6 angebracht. An dem Traggestell 7 sind in der vorliegenden Ausführungsform auch die Rollen 10 drehbar gelagert angebracht. Zur Kopplung der Heizanordnung 5 mit dem Maschinengestell 2, das in der vorliegenden Ausführungsform zu großen Teilen ausgeblendet ist, ist eine Haltevorrichtung 11 vorgesehen. Die Haltevorrichtung 11 ist in der vorliegenden Ausführungsform als gelenkig angeordnete Stange ausgeführt, die die Heizanordnung 5, insbesondere das Traggestell 7, mit dem Maschinengestell 2 verbindet.

Durch die Haltevorrichtung 11 ist die Heizanordnung 5 im Heizbereich gehalten. Die Heizanordnung 5 umfasst zudem eine Justieranordnung 15. Die Justieranordnung 15 umfasst einen Rollenverstellmechanismus 17. Der Rollenverstellmechanismus 17 ermöglicht es, die Lage der Rollen 10, insbesondere die Lage der Achse 18 der Rollen 10, gegenüber dem Traggestell 7 und/oder gegenüber dem mindestens einen Induktor 6 zu verändern.

In der vorliegenden Ausführungsform ist der Rollenverstellmechanismus 17 derart ausgestaltet, dass die Lage der Rollen 10 gegenüber dem Traggestell 7 verändert werden kann.

Die Justieranordnung 15 umfasst bevorzugt auch einen Induktorverstellmechanismus 19. Dieser ist dazu geeignet und/oder eingerichtet, die Lage des Induktors 6 gegenüber dem Traggestell 7 und/oder gegenüber den Rollen 10 zu verändern.

In der vorliegenden Ausführungsform umfasst der Induktorverstellmechanismus 19 ein in dem Traggestell 7 vorgesehenes Langloch, in das ein Fortsatz ragt, wobei der Fortsatz bevorzugt starr mit dem Induktor 6 verbunden ist. Dadurch kann eine Verschiebung des Induktors 6 gegenüber dem Traggestell 7 im Rahmen der durch das Langloch ermöglichten Bewegungsfreiheit erfolgen.

Befindet sich der Induktor 6 in der gewünschten Lage, so kann diese Lage beispielsweise durch Festziehen einer Schraube festgelegt werden. Selbiges gilt für den Rollenverstellmechanismus 17. Durch die Justieranordnung 15 kann ein zwischen dem mindestens einen Induktor 6 und dem Ring 3 vorgesehener Spalt 14 angepasst werden. Insbesondere bei der Verwendung mehrerer Induktoren 6 kann durch den Induktorverstellmechanismus 19 eine individuelle Anpassung der Lage der Induktoren 6 vorgenommen werden.

Bevorzugt können beispielsweise alle Induktoren 6 derart justiert werden, dass ein konstanter Spaltabstand 16 zwischen den Induktoren 6 und dem Ring 3 gegeben ist. Zudem kann die Justierung des Spaltes 14 auch durch den Rollenverstellmechanismus 17 vorgenommen werden. So kann beispielsweise die Lage aller Induktoren 6 gleichzeitig durch Veränderung der Lage der Rollen 10 gegenüber dem Traggestell 7 verändert werden.

In allen Ausführungsformen ist bevorzugt vorgesehen, dass die Heizanordnung 5 und die Rollen 10 an dem Ring 3 seitlich geführt und/oder zentriert sind. In der vorliegenden Ausführungsform der Fig. 3 umfassen die Rollen 10 hierfür jeweils einen Spurkranz 24. Dieser Spurkranz 24 überragt jeweils die Fläche des Rings 3, an dem die Rollen 10 abrollen. In der vorliegenden Ausführungsform überragen die Spurkränze 24 der Rollen 10 den Ring 3 im stirnseitigen Bereich des Rings 3, womit eine seitliche Führung gegeben ist. Insbesondere ist beidseitig des Rings 3 jeweils ein Spurkranz 24 angeordnet, sodass auch eine beidseitige Führung erfolgt.

In der vorliegenden Ausführungsform sind jeweils zwei Rollen 10 an einer Achse 18 angeordnet. Die Rollen 10 können entweder freilaufend auf dieser Achse 18 gelagert sein oder starr mit der Achse 18 verbunden sein, wobei in diesem Fall die Achse 18 selbst drehbar gelagert ist.

Bevorzugt betreffen alle Figuren 1 bis 3 dieselbe Ausführungsform. Gegebenenfalls sind die Figuren 1 bis 3 jeweils eigene Ausführungsformen.

Zur Herstellung eines endlosen gebackenen Bandes 1 bzw. einer gerollten Waffel kann beispielsweise wie folgt vorgegangen werden:
In einem Maschinengestell 2 ist ein Ring 3 umlaufend angeordnet. Der Ring 3 dreht sich im bestimmungsgemäßen Betrieb um seine Rotationsachse. Hierzu ist der Ring 3 an einer Halterolle 20 abgestützt und von einem Antrieb 21 drehbar angetrieben. Zudem ist der Ring 3 über eine Heizanordnung 5 beheizt.

Erfindungsgemäß erfolgt die Beheizung induktiv, wobei mindestens ein Induktor 6 vorgesehen ist und der Ring 3 selbst induktiv beheizt wird und dadurch bevorzugt als Suszeptor wirkt. Zwischen dem Induktor 6 und dem Ring 3 ist ein Spalt 14 freigehalten. Um nun den Spaltabstand 16, also den Abstand zwischen dem Induktor 6 und dem Ring 3 konstant zu halten, ist zur Beabstandung eine an der Heizanordnung 5 drehbar gelagerte Rolle 10 vorgesehen. Diese Rolle 10 rollt am Ring 3 ab, womit diese Rolle 10 auch toleranzbedingte Abweichungen abtastet. Dadurch, dass die Heizanordnung 5 insbesondere direkt am Ring 3 abgestützt ist, kann der Spaltabstand 16 des Spalts 14 konstant gehalten werden, selbst wenn der Ring 3 toleranzbedingt von einer perfekten zylindrischen Form abweicht.

Der beheizte Ring 3 umfasst eine Backfläche 4. Auf diese Backfläche 4 wird durch eine Backmassenauftragsvorrichtung 8 kontinuierlich eine vorzugsweise flüssige Backmasse aufgetragen. Die Backmassenauftragsvorrichtung 8 ist bevorzugt in allen Ausführungsformen starr bzw. festlegbar mit dem Maschinengestell 2 gekoppelt und insbesondere ortsfest bzw. maschinenfest angeordnet.

Beim kontinuierlichen Auftragen der Backmasse auf die bewegte Backfläche 4 wird ein Streifen der Backmasse auf der Backfläche 4 gebildet. Während des Transports dieses Streifens entlang des umlaufenden Rings 3 wird dieser durch die Beheizung der Backfläche 4 gebacken. An einer anderen Stelle des Maschinengestells 2 wird das gebackene Band 1 von einer Bandabnahmevorrichtung 9 kontinuierlich abgenommen. Insbesondere wird das gebackene Band 1 in heißem, plastisch verformbarem Zustand abgenommen.

Die in dieser Backvorrichtung verwendeten Backmassen umfassen bevorzugt einen hohen Zuckeranteil, wie er für die Herstellung von Waffelröllchen oder Hippen bekannt ist. Der Zuckeranteil ist in seinem heißen Zustand weich und verformbar. Erst durch die Kühlung erstarrt der Zucker und gibt den Produkten die charakteristische knusprigspröde Konsistenz. Es können im Rahmen der vorliegenden Erfindung herkömmliche Backmassen für gattungsgemäße Backvorrichtungen eingesetzt werden.

Bevorzugt ist nach der Bandabnahmevorrichtung 9 eine Wickelvorrichtung 22 zur Aufwicklung des Bandes 1 und zur Bildung einer Waffelrolle vorgesehen. Überdies kann der Wickelvorrichtung 22 eine Schneidvorrichtung 23 nachgeschalten sein, die die Waffelrolle in wählbaren Abständen ablängt.

Bei dem Aufwickeln des Bandes 1 in der Wickelvorrichtung 22 wird das Band 1 um einen Rolldorn gewickelt, der im Wesentlichen normal oder schräg zur Drehachse des Rings 3 verläuft. Zudem wird während dem Aufwickeln die Waffelrolle entlang des Wickeldorns der Wickelvorrichtung 22 weitertransportiert, womit kontinuierlich eine im Wesentlichen endlose Waffelrolle gebildet wird. Erst durch Ablängen der Waffelrolle in der Schneidvorrichtung 23 werden vereinzelte Waffelröllchen bzw. Hippen gebildet.

Gegebenenfalls ist vorgesehen, dass an dem Ring 3 bzw. an der Backfläche 4 mehrere Bänder 1 nebeneinander gebacken werden. Für jedes Band 1 ist bevorzugt eine Bandabnahmevorrichtung 9 bzw. Wickelvorrichtung 22 vorgesehen.

## Patentansprüche

1. Backvorrichtung zum Herstellen mindestens eines, insbesondere endlosen, gebackenen Bandes (1), umfassend:
- einen in oder an einem Maschinengestell (2) umlaufenden Ring (3), der an mindestens einer Oberfläche eine endlose Backfläche (4) umfasst,
- eine Heizanordnung (5), die mindestens einen Induktor (6) zur induktiven Beheizung des Rings (3) und ein Traggestell (7) aufweist,
- eine Backmassenauftragsvorrichtung (8) zum kontinuierlichen Auftragen einer vorzugsweise flüssigen Backmasse auf die Backfläche (4),
- eine Bandabnahmevorrichtung (9) zum kontinuierlichen Abnehmen des auf der beheizten Backfläche (4) gebackenen Bandes (1),
- und eine Haltevorrichtung (11) zur Halterung der Heizanordnung (5) in einem Heizbereich,
**dadurch gekennzeichnet, dass** die Heizanordnung (5) über mindestens eine drehbar gelagerte Rolle (10) am Ring (3) abgestützt ist.

2. Backvorrichtung nach Anspruch 1, **dadurch gekennzeichnet, dass** die mindestens eine Rolle (10) zur konstanten Beabstandung des Induktors (6) von dem Ring (3) an einer Fläche des Rings (3), insbesondere an der inneren Mantelfläche (12) oder an der äußeren Mantelfläche (13) des Rings (3), abrollt.

3. Backvorrichtung nach Anspruch 1 oder 2, **dadurch gekennzeichnet,**
- **dass** am Traggestell (7) der Heizanordnung (5) mehrere Rollen (10), insbesondere vier Rollen (10), angebracht sind,
- und **dass** die Rollen (10) zusammen mit der Heizanordnung (5) einen Wagen bilden, der auf einer Fläche des umlaufenden Rings (3) abrollt.

4. Backvorrichtung nach einem der vorangegangenen Ansprüche, **dadurch gekennzeichnet,**
- **dass** die Heizanordnung (5) über eine Haltevorrichtung (11) in einem ortsfesten bzw. maschinenfesten Heizbereich gehalten ist,
- wobei die Haltevorrichtung (11) eine Bewegung der Heizvorrichtung gegenüber dem Maschinengestell (2) in radialer Richtung des Rings (3) zulässt.

5. Backvorrichtung nach einem der vorangegangenen Ansprüche, **dadurch gekennzeichnet, dass** am Traggestell (7) der Heizanordnung (5) mehrere Induktoren (6) angebracht sind.

6. Backvorrichtung nach einem der vorangegangenen Ansprüche, **dadurch gekennzeichnet,**
- **dass** zwischen dem mindestens einen Induktor (6) und dem Ring (3) ein Spalt (14) freigehalten ist,
- und **dass** eine Justieranordnung (15) zur Wahl und Einstellung des Spaltabstandes (16) und insbesondere der Form des Spalts (14) vorgesehen ist.

7. Backvorrichtung nach Anspruch 6 **dadurch gekennzeichnet,**
- **dass** die Justieranordnung (15) einen Rollenverstellmechanismus (17) zur festlegbaren Einstellung der Lage der Rollen (10) und insbesondere deren Achsen (18) gegenüber der Heizanordnung (5) und insbesondere gegenüber dem Traggestell (7) umfasst,
- und/oder dass die Justieranordnung (15) einen Induktorverstellmechanismus (19) zur festlegbaren Einstellung der Lage des Induktors (6) gegenüber dem Traggestell (7) umfasst,
- und/oder dass die Justieranordnung (15) einen Induktorverstellmechanismus (19) zur festlegbaren individuellen Einstellung der Lage der Induktoren (6) gegenüber dem Traggestell (7) umfasst.

8. Backvorrichtung nach einem der vorangegangenen Ansprüche, **dadurch gekennzeichnet, dass** der Ring (3) oder zumindest ein Teil des Rings (3) als induktiv erwärmter Suszeptor ausgebildet ist oder wirkt.

9. Backvorrichtung nach einem der vorangegangenen Ansprüche, **dadurch gekennzeichnet,**
- **dass** am Maschinengestell (2) eine Halterolle (20) drehbar gelagert angebracht ist, an der der Ring (3) abgestützt ist,
- und **dass** ein Antrieb (21) zum Drehen des Rings (3) um seine Drehachse vorgesehen ist.

10. Backvorrichtung nach einem der vorangegangenen Ansprüche, **dadurch gekennzeichnet, dass** der Ring (3) im Maschinengestell (2) schwimmend gelagert ist.

11. Backvorrichtung nach einem der vorangegangenen Ansprüche, **dadurch gekennzeichnet,**
- **dass** die Heizvorrichtung und insbesondere die mindestens eine Rolle (10) auf einer Fläche der Rings (3) abgestützt ist,
- und **dass** die Backfläche (4) auf der gegenüberliegenden Fläche des Rings (3) angeordnet ist,
- und insbesondere dass die Heizvorrichtung an der inneren Mantelfläche (12) des Rings (3) und die Backfläche (4) auf der äußeren Mantelfläche (13) des Rings (3) angeordnet sind.

12. Backvorrichtung nach einem der vorangegangenen Ansprüche, **dadurch gekennzeichnet, dass** die mindestens eine Rolle (10) einen Spurkranz (24) zur seitlichen Führung der Heizanordnung (5) gegenüber dem Ring (3) umfasst.

13. Backvorrichtung nach einem der vorangegangenen Ansprüche, **dadurch gekennzeichnet,**
- **dass** beidseitig der Heizvorrichtung jeweils eine Rolle (10) angeordnet ist,
- **dass** beide Rollen (10) jeweils einen Spurkranz (24) umfassen, und dass die beiden Spurkränze (24) zur seitlichen Zentrierung der Heizanordnung (5) den Ring (3) beidseitig überragen oder umgreifen.

14. **Produktionsanlage** zur Herstellung gerollter Waffeln, insbesondere Ringbackmaschine, umfassend:
- eine Backvorrichtung nach einem der vorangegangenen Ansprüche,
- eine Wickelvorrichtung (22) zum kontinuierlichen Bilden einer schräg gewickelten Waffelrolle,
- und gegebenenfalls eine Schneidvorrichtung (23) zum Bilden einzelner Waffelröllchen durch Ablängen der Waffelrolle.
